# EUROPEAN PATENT APPLICATION

(11) **EP 2 324 716 A2**
(43) Date of publication of application: **25.05.2011**
(21) Application number: 11153315.4
(22) Date of filing: 12.10.2007
(51) Int. Cl.: A23C 19/032, A23C 19/068, A23C 19/16

(54) **Method for preparing a semi-hard or hard cheese, and cheese thus obtained**

(30) Priority: 13.10.2006 NL 1032678
(62) Divisional of application: 07118385.9
(71) Applicant: Friesland Brands B.V., 3818 LE Amersfoort (NL)
(72) Inventor: Knier, Cornelis Wyberen, 8808 HP, Dongjum (NL); Bonestroo, Martin Hendrik, 7241 VL, Lochem (NL); van Arem, Everhardus Jacobus Franciscus, 8802 CR, Franeker (NL)
(74) Representative: Jansen, Cornelis Marinus

(57) **Abstract**

The invention relates to a method for manufacturing a foil-ripened cheese, wherein the ripening step is adjusted such that the flavor development is improved and is similar to that of a cheese which has been subjected to a standard ripening. The invention further relates to a foil-ripened cheese which is similar with respect to flavor to a standard ripened cheese which is provided with a conventional cheese covering means.

## Description

The invention relates to a method for preparing a semi-hard or hard cheese, and preferably for preparing a cheese of the Gouda or Edam type, and a cheese thus obtained.

The conventional method for preparing Gouda cheese comprises a ripening step, in which, after brining, the young cheese is ripened at 12-14° C minimally to an age of four weeks. Here, the outside of the young cheese is provided with a conventional cheese covering means to protect the rind. During this ripening, referred to by the term "standard ripening" or also "natural ripening", the cheese loses moisture.

In addition, Gouda cheeses — and, for that matter, also other cheeses of the semi-hard or hard type - are also ripened as rindless cheese, with the young cheeses being in packaged in foil after brining and then being ripened at a temperature of 4-7° C. This technique is known as foil ripening. Cheese ripened in this manner does not lose moisture during the ripening, which is particularly economically advantageous. In addition, a practical advantage is that foil-ripened cheese, which often has a rectangular shape, results in no or hardly any cutting losses when cut up into slices or bars. In comparison, the cutting loss with standard ripened cheese, which is also referred to by the term "naturally ripened cheese" may run to up to as much as 15%.

WO-97/38587 describes such a method for preparing Gouda cheese, where the packaged cheese is ripened at 7° C, utilizing a genetically modified *Lactobacillus.* In a reference experiment, the use of a Bos starter culture and another microorganism culture of not genetically modified *Lactobacillus* is described.

However, a drawback of the foil ripening is that, due to the different conditions, the cheese is also subject to a different type of ripening. With this different type of ripening, the flavor development falls short. Increasing the ripening temperature to the 12-14° C conventional for standard ripening is no option, because the flavor then becomes deviant; in particular, the flavor deficiency "bitter" arises. In addition, at that temperature, foil-ripened cheese has a consistency which is not desired; thus, the structure or texture of the cheese may be too sandy or too soft.

Dutch patent 1018856 contemplates obviating these drawbacks by providing a foil-ripened cheese of the hard or semi-hard type, which cheese is of the Gouda or Edam type, which can be obtained with a method in which to a cheese milk, in addition to a conventional amount of starter (for instance a customary amount of acid), an adjunct starter is added, which adjunct starter has a higher proteolytic and/or peptidolytic capacity compared to conventional starters. Then, in a conventional manner, a young cheese of the hard or semi-hard type is formed, which young cheese, after brining, is packaged in foil and vacuumized, and where the foil-packaged cheese is subjected to a ripening at a temperature in the range from 10 to 16° C. In preferred embodiments, thermophilic cultures are used.

The present invention contemplates providing an improvement of the method known from NL 1018856 and the cheeses to be prepared therewith. In particular, according to the invention, improvements are found which result in a cheese with a riper flavor and/or where, during the ripening, the cheese becomes softer and smoother. More in detail, due to the cheese preparation and with the cheese thus obtained, a riper flavor is obtained, which flavor falls within a "Gouda profile". This riper flavor is also found with continued ripening. Due to the use of thermophilic adjunct culture, cheese according to NL 1018856 has a somewhat sweetish flavor, particularly with continued ripening. Further, the cheese according to the invention is softer and smoother.

Further, also with continued ripening, the cheese prepared according to the present invention contains fewer crystals than the cheese according to NL 1018856.

These improvements are obtained by using, instead of an adjunct starter with a higher proteolytic and/or peptidolytic capacity, a different adjunct starter.

More in detail, the invention relates to a method for manufacturing a foil-ripened cheese of the hard or semi-hard type, where, to a cheese milk, in addition to a conventional amount of starter, an adjunct starter is added, which adjunct starter consists of a combination culture, which combination culture comprises at least the following three cultures: (i) ripening and/or debittering cultures; (ii) nisin-producing cultures; and (iii) non-starter lactic acid cultures; where then, in a conventional manner, a young cheese of the hard or semi-hard type is formed, which young cheese, after brining, is packaged in foil and vacuumized; and where the foil-packaged cheese is subjected to a ripening at a temperature in the range from 10 to 16° C.

In the cheese preparation according to the present invention, for instance a (standard) abomasal rennet, but also other rennets, such as microbial rennet (for instance Fromage XL) may be used.

In a preferred embodiment, the foil-packaged cheese is subjected to a ripening at a temperature of at least 12° C and preferably from 12 to 14° C. Cheeses which have been subjected to a ripening at this minimum temperature meet the criterion of the Dutch Agricultural Quality Decree and are designated "natural ripened".

The ripening step usually lasts at least 4 weeks, and preferably no longer than 6 months.

In themselves, the types of cultures (i-iii), which are used in combination as an adjunct starter according to the method according to the invention, are each known per se to a skilled person.

Thus, as ripening and debittering cultures, the known CR cultures or "Flavor-control cultures", which cultures are available from Chr. Hasen, Denmark, can be used. In addition, such cultures are described in, for instance, the articles of Vindfeldt in Scandinavian Dairy Information 7(1) (1993) 34-35 and in DMZ-Lebensmittelindustrie und Milchwirtschaft 113(42) (1992) 1252-1254 and 1256. These cultures contain *Lactococcus lactis* or *Lactococcus cremoris* strains with low acidifying activity. Examples of such cultures are the CR-cultures CR-210, CR-213, CR-319 and CR-312 *(ex* Chr. Hansen) and similar cultures such as B33 and 0500 *(ex* CSK Food Enrichment).

Nisin-producing cultures are also commercially available, for instance culture BS-10 from Chr. Hansen, Denmark and culture TC 17-5 from CSK Food Enrichment, The Netherlands. Further, such cultures are described by O'Sullivan et al. in J. Appl. Microbiol. 95 (2003), 1235-1241. These adjunct cultures provide lysis of starter bacteria, which releases enzymes, including ripening enzymes. The strain described in this publication is incorporated in the present specification by reference. When the cheese starter used is already a nisin-producing starter, no nisin-producing adjunct starter needs to be used.

Examples of non-starter lactic acid bacteria are *Lactobacillus paracasei* strains. Such strains are described by, for instance, Thage et al. in Int. Dairy J. 15 (2005) 795-805, which cultures are incorporated in this specification by reference. These cultures form flavorings from amino acids.

The cultures are, for instance, available in DVS (Direct Vat Set) form, in which form they can be added directly to the cheese vat with the cheese milk and the standard cheese starter therein. In addition, it is also possible to cultivate the adjunct starters separately or not separately and then add them to the cheese vat. They have no direct effect on the actual cheese-making process.

Thus, according to the invention, a foil-ripened cheese is obtained, where the flavor development can be controlled to a flavor and consistency which is still more similar to that of a standard ripened cheese than the cheese prepared according to NL-C-1018856.

Without wishing to be bound to any theory, it is assumed that, in the foil cheese prepared in a conventional manner but ripened at too high a temperature of 12-14° C, due to the combination of the relatively high moisture content and the relatively high temperature, a number of enzymatic processes take place too rapidly. As a result, accumulation of particular compounds may take place, so that deviations in flavor, such as "bitter", and deviations in structure and texture may occur.

By now using the adjunct starter according to the invention, these peptides which cause the above-mentioned deviations are degraded. In addition, the cheeses become smoother during ripening, so that they come closer to the structure and texture of natural cheese.

The adjunct starter may comprise thermophilic and/or mesophilic lactic acid bacteria. Preferably, mesophilic cultures are used.

Incidentally, before the addition of the adjunct starter when it is cultivated in the cheese milk, the pH of this starter is preferably set to be neutral, for instance by adding a suitable amount of sodium hydroxide solution. This is done to prevent the cheese preparation process from being adversely affected.

The combination adjunct starter may be introduced into the cheese milk simultaneously with, before or after the addition of the conventional starter. Preferably, the adjunct starter is added simultaneously with or after the conventional starter.

The adjunct starter does not so much play a role in the acidification process as in the addition of a package of enzymes. Good results are obtained when, based on the weight of the total cheese milk, 0.2 to 5 wt.% and preferably at least 0.5 wt.% and preferably at most 2 wt.% of non-concentrated adjunct starter is added when it is cultivated in the cheese milk. Incidentally, deep-frozen and concentrated adjunct starters may be used as well, such as Direct to Vat Set Starter (DVS) cultures, of which the expert of course knows how many equivalents of these cultures are needed to obtain results similar to those obtained with the non-concentrated adjunct starters.

The lactic acid bacteria in the adjunct cultures may be both mesophilic and thermophilic. It has been found according to the invention that, with thermophilic lactic acid bacteria, a somewhat sweet, nutty flavor is obtained. For the preparation of Gouda cheese, therefore mesophilic lactic acid bacteria are preferred. In addition, thermophilic lactic acid bacteria cause more crystallization in the adjunct starter.

According to the invention, cheeses are obtained which become smoother during the ripening. The flavor and aftertaste are smoother and less bitter than those of the cheeses prepared according to NL-C-1018856.

The method according to the invention is very suitable for preparing foil-ripened cheeses of the Gouda or Edam type. In addition, it is has also been found possible to manufacture foil-ripened semi-hard and hard cheeses of a lower fat content than the standard conventional 48⁺ and 40⁺ for above-mentioned types, such as of the 30⁺ type.

Although one of the main objects of the method according to the invention is to prepare foil-ripened cheese which has a flavor similar to standard ripened cheese, due to the variation of the type and the amount of adjunct starter, it is also possible to effect flavor differentiation. On the basis of the present specification, the expert has sufficient information available to realize such flavor differentiations.

Since the cheeses prepared according to the method according to the invention have different properties than the known foil-ripened cheeses, the invention also comprises foil-ripened cheese of the hard or semi-hard type obtainable using the method according to the invention. It will be clear to a skilled person that these differences are particularly manifest after a minimum duration of the ripening step, typically at least 4 weeks.

The invention will now be elaborated on the basis of the following non-limiting examples.

### Example 1

To 500 1 of low-pasteurized cheese milk, standardized at 3.21% of protein and 3.28% of fat, 3000 ml of mesophilic starter were added, type FR 18 *(ex* CSK Food Enrichment B.V., Leeuwarden) in addition to 300 g of a 33% solution of CaCl₂ *(ex* CSK Food Enrichment B.V.). As an adjunct starter, 0.03% of an adjunct starter consisting of *Lactobacillus paracasei,* CR-culture and BS-10 (all *ex* Chr. Hansen) was added in deep-frozen and concentrated form.

At a temperature of 30.5° C, to the inoculated cheese milk, 100 g of abomasal rennet *(ex* CSK Food Enrichment B.V.) were added and the milk gel formed was cut and processed to curd in the conventional manner. Then, 240 1 of whey were drained and 78 1 of washing water were added at a post-heating temperature of 35-37°C.

After a total processing time of 60 minutes, the curd was drained and transferred into 4.5-kg square block molds. After pressing and brining, the cheese was packaged in foil and ripened at 13° C.

After 14 days, the cheese had a fat content calculated on the dry matter of 51.2% and a moisture content of 43.8%.

### Example 2

To 500 1 of low-pasteurized cheese milk, standardized at 3.40% of protein and 3.40% of fat, 3500 ml of mesophilic starter type FR 18 *(ex* CSK Food Enrichment B.V., Leeuwarden) and 400 g of a 33% solution of CaCl₂ *(ex* CSK Food Enrichment B.V.) were added. As an adjunct starter, 0.03% of a same adjunct starter as used in Example 1 was added.

At a temperature of 31.0° C, 100 g of abomasal rennet *(ex* CSK Food Enrichment B.V.; chymosin/pepsin ratio 75:25, strength 10,800) were added to the cheese milk. The milk gel was cut and processed to curd in the conventional manner. Then, 240 1 of whey were drained and 78 1 of washing water were added and post-heating took place at a temperature of 37°C.

After a total processing time of 90 minutes, the curd was drained and transferred into 4.5-kg square block molds. After pressing and brining, the cheese was packaged in foil and ripened at 13° C. After 14 days, the cheese had a fat content based on the dry matter of 51.0% and a moisture content of 40.2%.

This example was repeated while (i) omitting the nisin-producing culture; (ii) substituting mesophilic adjunct starter by thermophilic adjunct starter.

In flavor tests after 16 weeks, the thermophilic adjunct starter embodiment had a sweet, nutty flavor which differed from the flavor of a Gouda cheese. The nisin-forming culture was found to be essential to the formation of the flavor of Gouda cheese in the sense that the results of the example without the nisin-forming culture clearly fell short of the example according to the invention.

### Example 3

To 16,870 liters of low-pasteurized cheese milk, standardized at a fat content of 3.51 wt.% and 3.32 wt.% of protein, 120 1 of mesophilic starter type FR 18 *(ex* CSK Food Enrichment B.V., Leeuwarden), 13833 g of calcium chloride (ex CSK Food Enrichment B.V.) solution in water, 3374 g of abomasal rennet *(ex* CSK Food Enrichment B.V.), 0.03% of an adjunct starter consisting of *Lactobacillus paracasei,* CR-culture and BS-10 (all *ex* Chr. Hansen) were added in deep-frozen and concentrated form.

The cheese milk thus obtained was curdled at 30° C in an otherwise conventional manner and a (Gouda) cheese of the semi-hard type was prepared, while the post-heating temperature was set at 37° C. The moisture content of the cheese after brining was 40.7 wt.%. The cheeses were vacuum-packed in foil and stored at 14° C. The pH after 15 days of storage was 5.22; the moisture content was 39.9%; the fat-in-dry matter content was 51.2% and the salt-in-dry matter content was 3.1%.

After 12-13 weeks, the cheeses were judged by a taste panel according to the standard of a ripe Gouda cheese (scale 3-8). The results are in Table 1:

**Table 1**

| *Texture* | *Flavor*/*smell* | *Appearance* |
|---|---|---|
| 7 (good) | 7 (good) | globule formation at rind (5) |

Testing also took place after 16 weeks, see Table 2.

**Table 2**

| *Texture* | *Flavor* / *smell* | *Appearance* |
|---|---|---|
| 7,3 (good) | 6,7 (good) | globule formation at rind (5)) |

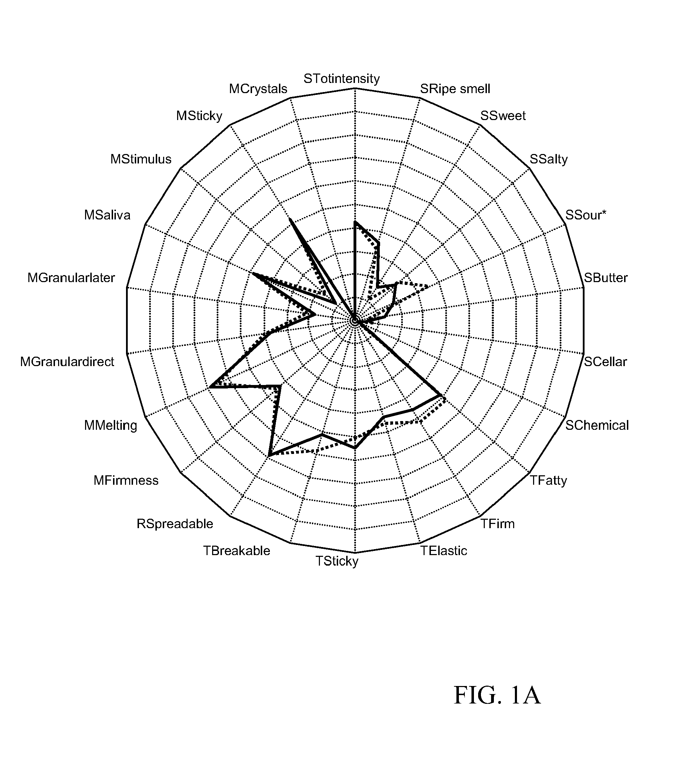

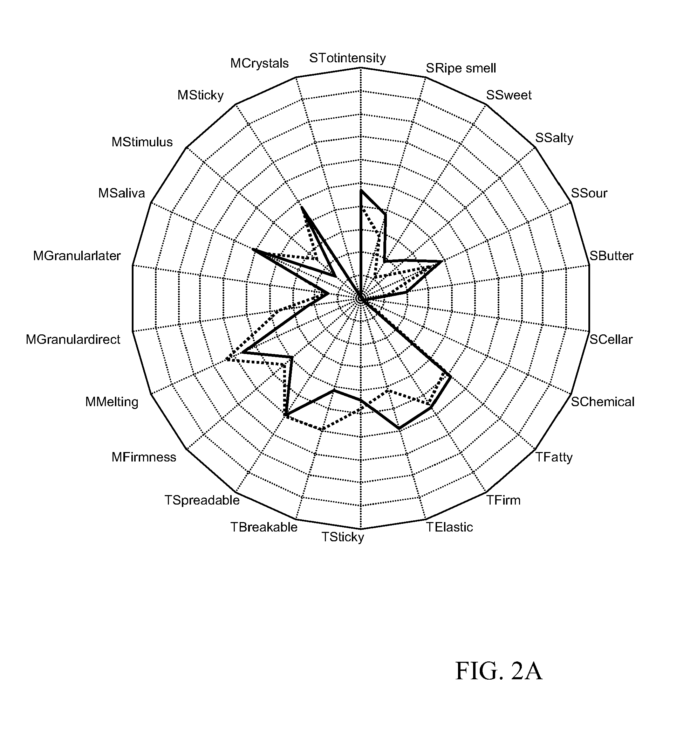

In addition, the cheeses of 13 and 16 weeks were subjected to a test by an analytic panel. Fig. 1A shows the results at 13 weeks (reference: naturally ripened Gouda) for the aspects smell/texture/mouthfeel; Fig. 2A shows the same aspects after 16 weeks.

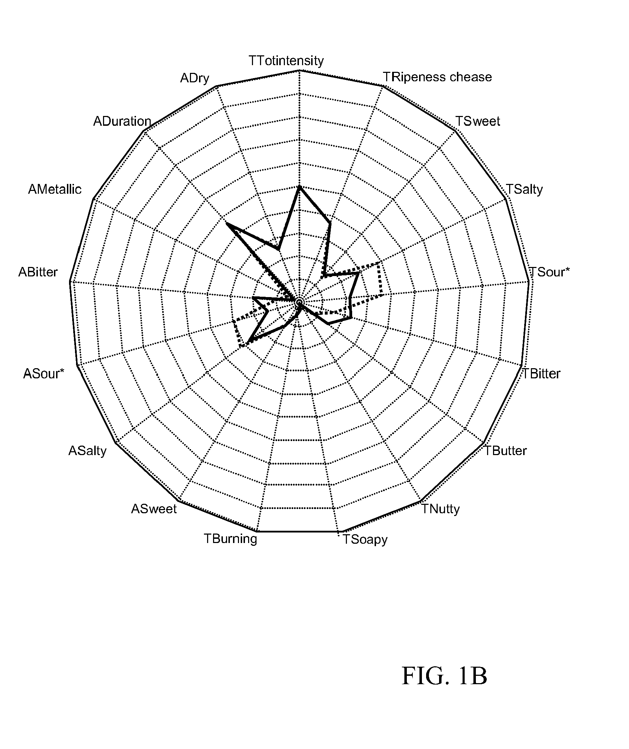

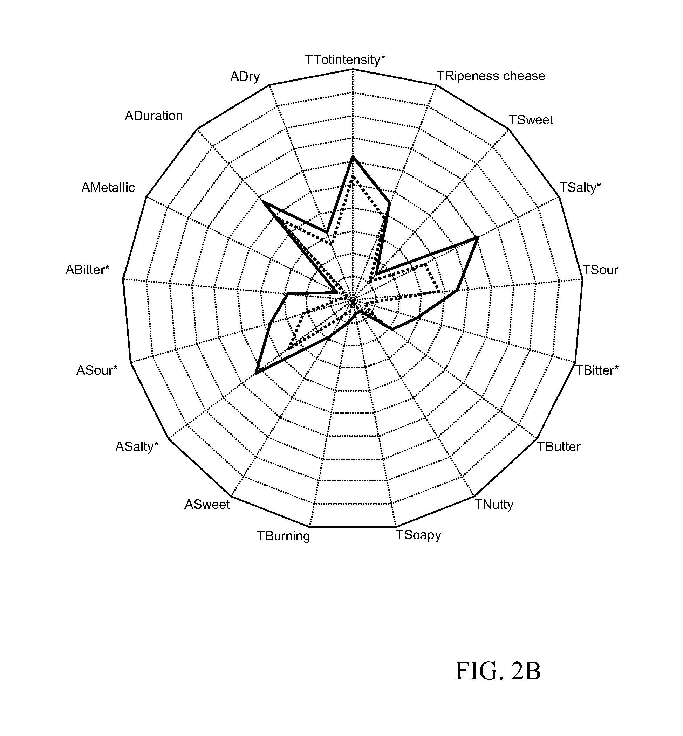

Fig. 1B shows the flavor and aftertaste after 13 weeks; Fig. 2B after 16 weeks.

## Claims

1. A method for obtaining a riper flavor in cheese or for obtaining a softer and smoother cheese, said cheese being of the hard or semi-hard type using a thermophilic adjunct culture comprising *Lactobacillus paracasei* together with a conventional amount of starter; wherein in a conventional manner, a young cheese of the hard or semi-hard type is formed, which young cheese, after brining, is packaged in foil and vacuumized; and wherein the foil-packaged cheese is subjected to a ripening at a temperature in the range of 10 to 16 °C.

2. The method of claim 1, wherein the thermophilic adjunct culture additionally comprises at least a ripening and/or debittering culture.

3. The method of claim 1 or claim 2 wherein the thermophilic adjunct culture additionally comprises at least a nisin-producing culture.

4. The method according to any one of the preceding claims, wherein the foil-packaged cheese is subjected to a ripening at a temperature from 12 to 14°C.

5. A method according to claim 1 or 2, wherein the ripening step lasts at least 4 weeks.

6. A method according to any one of the preceding claims, wherein the ripening and/or debittering cultures and CR cultures or flavor control cultures, preferably CR-210, CR-213, CR-319, CR-312, B33 and 0500.

7. A method according to any one of the preceding claims, wherein the nisin-producing culture is BS-10 or TC17-5.

8. The method according to any of the preceding claims, wherein the adjunct starter comprises thermophilic and/or mesophilic lactic acid bacteria.

9. The method according to claim 8, wherein the adjunct starter comprises mesophilic lactic acid bacteria.

10. A method according to any one of the preceding claims, wherein the non-concentrated adjunct starter is added to the cheese milk in an amount, based on the weight of the total cheese milk, of 0.2-5 wt.%, preferably of 0.5-2 wt.%, or wherein the adjunct starter is used as DVS.

11. Foil ripened cheese of the Gouda or Edam type, obtainable by using the method according to any one of the preceding claims.

12. A method of manufacturing the foil-ripened cheese of claim 11 of the hard or semi-hard type being of the Gouda or Edam type, wherein, to cheese milk, in addition to a conventional amount of starter, an adjunct starter is added, which adjunct starter consists of a combination culture, which combination culture comprises at least the following three types of cultures:
(i) ripening and/or debittering cultures; (ii) nisin-producing cultures, with the proviso that the starter *per* se is not itself a nisin-producing starter; and (iii) non-starter lactic acid bacteria, wherein then, in a conventional manner, a young cheese of the hard or semi-hard type is formed, which young cheese, after brining, is packaged in foil and vacuumized; and wherein the foil-packaged cheese is subjected to a ripening at a temperature in the range from 10 to 16°C.
